# EUROPÄISCHE PATENTSCHRIFT

(11) **EP 2 240 347 B1**
(45) Veröffentlichungstag und Bekanntmachung des Hinweises auf die Patenterteilung: **11.04.2018**
(21) Anmeldenummer: 08867667.1
(22) Anmeldetag: 19.11.2008
(51) Int. Cl.: B60R 21/017, H02J 9/06, H02M 3/158

(54) **STEUERGERÄT UND VERFAHREN ZUR ANSTEUERUNG VON PERSONENSCHUTZMITTELN FÜR EIN FAHRZEUG**
CONTROL UNIT AND METHOD FOR CONTROLLING PERSONAL PROTECTION MEANS FOR A VEHICLE
APPAREIL DE COMMANDE ET PROCÉDÉ DE COMMANDE DE MOYENS DE PROTECTION DE PERSONNES POUR UN VÉHICULE

(30) Priorität: 03.01.2008 DE 102008003080
(43) Veröffentlichungstag der Anmeldung: 20.10.2010
(73) Patentinhaber: Robert Bosch GmbH, 70442 Stuttgart (DE)
(72) Erfinder: SIEVERS, Falko, 72762 Reutlingen (DE); SCHUMACHER, Hartmut, 71691 Freiberg (DE); GSCHWIND-SCHILLING, Rainer, 71287 Weissach-Flacht (DE); FUERST, Reiner, 70825 Korntal-Muenchingen (DE); LIST, Carsten, 71642 Ludwigsburg (DE)
(86) Internationale Anmeldenummer: PCT/EP2008/065783
(87) Internationale Veröffentlichungsnummer: WO 2009/083335

(56) Entgegenhaltungen:
- DE-A1- 4 447 174
- DE-A1-102004 018 261
- DE-A1-102004 060 296
- US-A1- 2002 140 293
- US-A1- 2002 140 410

## Beschreibung

### Stand der Technik

Die Erfindung betrifft ein Steuergerät bzw. ein Verfahren zur Ansteuerung von Personenschutzmitteln für ein Fahrzeug nach der Gattung der unabhängigen Patentansprüche.

Aus DE 10 2005 031 085 A1 ist es bereits bekannt, bei einem Steuergerät für den Personenschutz Schaltwandler vorzusehen, die eine Energiereserve auf eine deutlich über der Batteriespannung gelegene Energieversorgungsspannung laden und Abwärtswandler, die die Energieversorgungsspannung für Spannungen, die im Steuergerät benötigt werden, wieder abwärts wandelt. Diese Wandler sind üblicherweise als Schaltwandler ausgebildet.

Aus der Gattungsbildenden DE 10 2004 018 261 A1 ist ein Stromversorgungssystem für elektrische Verbraucher in Fahrzeugen bekannt. Über einen Boost-Wandler wird ein Reservestromversorgungs-Speicherkondensator aus einer über eine Drosselspule angeschlossenen Fahrzeugbatterie geladen. Um eine Überhitzung zu vermeiden wird während der Aufladephase der Strom zunächst konstant gehalten, was zur Folge hat, dass sich das Strombegrenzungselement mit der Zeit erwärmt. Überschreitet die Temperatur einen bestimmten Schwellenwert, dann wird der Strom schrittweise abgesenkt, was zur Folge hat, dass sich die Temperatur auf einen bestimmten Wert stabilisiert.

### Offenbarung der Erfindung

Vor diesem Hintergrund wird mit der vorliegenden Erfindung ein Steuergerät und ein Verfahren gemäß den unabhängigen Patentansprüchen vorgestellt. Vorteilhafte Ausgestaltungen ergeben sich aus den jeweiligen Unteransprüchen und der nachfolgenden Beschreibung.

Das erfindungsgemäße Steuergerät bzw. das erfindungsgemäße Verfahren zur Ansteuerung von Personenschutzmitteln für ein Fahrzeug mit den Merkmalen der unabhängigen Patentansprüche haben demgegenüber den Vorteil, dass durch eine höhere thermische Belastung durch eine Beeinflussung der Anstiegs- bzw. 30 Abfallzeiten des Ausgangssignals des wenigstens einen Schaltwandlers eine Reduktion einer elektromagnetischen Abstrahlung dieses Schaltwandlers erreicht werden kann. Es kann demnach ein sogenannter Ausgleich zwischen thermischer Belastung und Abstrahlung erreicht werden. Die elektromagnetische Verträglichkeit des erfindungsgemäßen Steuergeräts wird demnach verbessert. Dies kann sich besonders günstig im Empfangsbereich für Rundfunkgeräte im Fahrzeuge auswirken, so dass Störungen des Rundfunkempfangs durch die Abstrahlung von solchen Schaltwandlern reduziert werden. Solche Rundfunkbereiche sind beispielsweise der UKW-Bereich von 87,5 MHz bis 108 MHz.

Das erfindungsgemäße Steuergerät bzw. das erfindungsgemäße Verfahren vermeiden Zusatzkosten, die etwa durch statische Endstörmaßnahmen, wie sogenannte Snubber-Schaltungen o.ä. entstehen würden. Außerdem hätten solche statischen Endstörmaßnahmen den weiteren Nachteil einer generellen Wirkungsgradverschlechterung des Schaltwandlers.

Vorliegend handelt es sich bei dem Steuergerät um ein elektrisches Gerät, das in Abhängigkeit von Sensorsignalen die Personenschutzmittel, wie Airbags, Gurtstraffer, aber auch aktive Personenschutzmittel, wie für eine Fahrdynamikregelung oder Bremsen ansteuert. Ansteuern bedeutet dabei die Aktivierung dieser Personenschutzmittel.

Unter einem Schaltwandler ist ein Wandler zu verstehen, der eine Eingangsspannung unter Benuzung von Induktivitäten wie Drosseln oder Übertrager auf ein höheres oder niedrigeres Spannungsniveau transformiert, mit niedrigen Verlusten, insbesondere der Verluste der Schaltelemente sowie ohmscher Widerstände der Spule etc.. Die Glättung der Ausgangsspannung geschieht in der Regel durch Kondensatoren (Elektrolyt - Kondensatoren), sowie für höhere Frequenzanteile durch nahezu verlustfreie Keramikkondensatoren. Dieser Schaltwandler ist auf einem integrierten Schaltkreis angeordnet, beispielsweise einem Systembaustein, der viele Funktionen des Airbagsteuergeräts aufweist. Der Schaltwandler kann auch für sehr kleine Leistungen rein kapazitiv mit schlechtem Wirkungsgrad (Charge - Pump) aufgebaut sein.

Das Steuergerät weist eine Beeinflussungsschaltung auf, die hard- und/oder softwaremäßig ausgebildet sein kann. Diese Beeinflussungsschaltung bewirkt beim Schaltwandler in Abhängigkeit von der thermischen Belastung des Schaltwandlers, dass sich die Anstiegs- oder Abfallzeiten des wenigstens einen Ausgangssignals des Wandlers verändern, um gegebenenfalls einen Ausgleich zwischen thermischer Belastung und Abstrahlung zu finden. Aus den abhängigen Ansprüchen geht hervor, wie die Beeinflussungsschaltung genau ausgebildet sein kann.

Der physikalische Parameter am integrierten Schaltkreis wird durch die abhängigen Ansprüche definiert. Es sind jedoch weitere Möglichkeiten gegeben.

Unter einer thermischen Belastung des integrierten Schaltkreises ist beispielsweise die Temperatur am integrierten Schaltkreis zu verstehen.

Die An- oder Abfallzeiten des wenigstens einen Ausgangssignals sind die Zeiten, die das Signal benötigt, um von einem niedrigen Wert auf den gewünschten hohen Wert bzw. umgekehrt zu steigen bzw. zu fallen. Diese Anstiegs- oder Abfallzeiten bestimmen, wie stark die thermische Belastung bzw. die Abstrahlung ist. Je kürzer die An- und/oder Abfallzeiten sind, umso geringer ist die thermische Belastung, aber umso höher ist die Frequenz der Abstrahlung und umgekehrt.

Durch die in den abhängigen Ansprüchen aufgeführten Maßnahmen und Weiterbildungen sind vorteilhafte Verbesserungen des in den unabhängigen Patentansprüchen angegebenen Steuergeräts bzw. Verfahrens zur Ansteuerung von Personenschutzmitteln für ein Fahrzeug möglich.

Es ist vorteilhaft, dass die Beeinflussungsschaltung zumindest teilweise auf dem integrierten Schaltkreis angeordnet ist. Ist die Beeinflussungsschaltung, die die thermische Belastung auswertet, komplett auf dem integrierten Schaltkreis vorhanden, dann kann das erfindungsgemäße Verfahren komplett auf dem integrierten Schaltkreis ablaufen. Es ist jedoch möglich, dass Teile der Beeinflussungsschaltung außerhalb dieses integrierten Schaltkreises angeordnet sind, und zwar in anderen Komponenten des Steuergeräts, beispielsweise des Prozessors, vorzugsweise eines Mikrocontrollers, wobei dann beispielsweise der Mikrocontroller die physikalischen Parameter misst, die thermische Belastung des integrierten Schaltkreises bestimmt und daraus die Veränderung der Anstiegs- und Abfallzeiten bestimmt, um ein Optimum für die thermische Belastung und die Abstrahlcharakteristik des integrierten Schaltkreises zu erreichen.

Der wenigstens eine Schaltwandler weist wenigstens einen Schalttransistor auf, der durch eine Push/Pull-Gate-Treiberschaltung angesteuert wird. Die Push/Pull-Gate-Treiberschaltung weist eine erste einstellbare Stromquelle für die Anstiegszeit und eine zweite einstellbare Stromquelle für die Abfallzeit auf. Diese einstellbaren Stromquellen können adaptiv ausgeführt sein, d. h. kontinuierlich steuer- bzw. regelbar. Es ist jedoch möglich, ein reines Treibertransistorvielfach (MOS-FETs, Quantisierung) hierfür zu verwenden.

Vorteilhafter Weise sind die physikalischen Parameter entweder eine Eingangsspannung an den wenigstens einen Schaltwandler und/oder ein Schaltwandlerstrom und/oder eine Temperatur des integrierten Schaltkreises. Der physikalische Parameter wird dazu verwendet, die thermische Belastung des integrierten Schaltkreises zu bestimmen. Es ergibt sich, für einen Aufwärtswandler (Sperrwandler), dass bei einer hohen Eingangsspannung eine niedrigere thermische Belastung als bei einer niedrigeren Eingangsspannung vorliegt. Der Schaltwandlerstrom bestimmt durch seine Höhe die thermische Belastung und die Temperatur gibt sie direkt an.

Dass bei kleinen Eingangsspannungen eine hohe thermische Belastung vorliegt, liegt an dem schlechten Wirkungsgrad, den der Schaltwandler bei solch kleinen Eingangsspannungen aufweist. Dies ist bei einer gegebenen Ausgangslast im Wesentlichen eine Folge des zunehmenden Eingangsstroms bei fallender Eingangsspannung aufgrund höherer ohmscher Verluste in der Spule des Schaltwandlers und den Schalttransistoren. Für höhere Eingangsspannungen verbessert sich aufgrund des abnehmenden Wandlereingangsstroms der dadurch zurückgehenden Verluste in Spule und den Schalttransistoren der Wirkungsgrad und die Temperatur des integrierten Schaltkreises sinkt. Verdoppelt sich beispielsweise die Wandlereingangsspannung von 5 auf 10 V, so erhöht sich der Wirkungsgrad bei mehr als halbierten Wandlereingangsströmen auf ca. 90%. Erfindungsgemäß wird, da das Steuergerät für einen Worstcase-Fall thermisch dimensioniert ist, bei entsprechend geringerer thermischer Belastung als erwartet eine wiederum höhere thermische Belastung in Kauf genommen, um damit die Abstrahlung des wenigstens einen Schaltwandlers zu Lasten des Wirkungsgrades zu verringern. Dies stellt für die Benutzer solcher Schaltwandler ein Optimum dar.

Ausführungsbeispiele der Erfindung werden in der nachfolgenden Beschreibung anhand der Zeichnung näher erläutert.

Es zeigen
Figur 1
   ein Blockschaltbild des erfindungsgemäßen Steuergeräts,
Figur 2
   ein Blockschaltbild eines Systembausteins als der integrierten Schaltung,
Figur 3
   ein Stromzeitdiagramm,
Figur 4
   ein weiteres Blockdiagramm mit angeschlossenen Komponenten des Systembausteins als der integrierten Schaltung und
Figur 5
   ein Flussdiagramm.

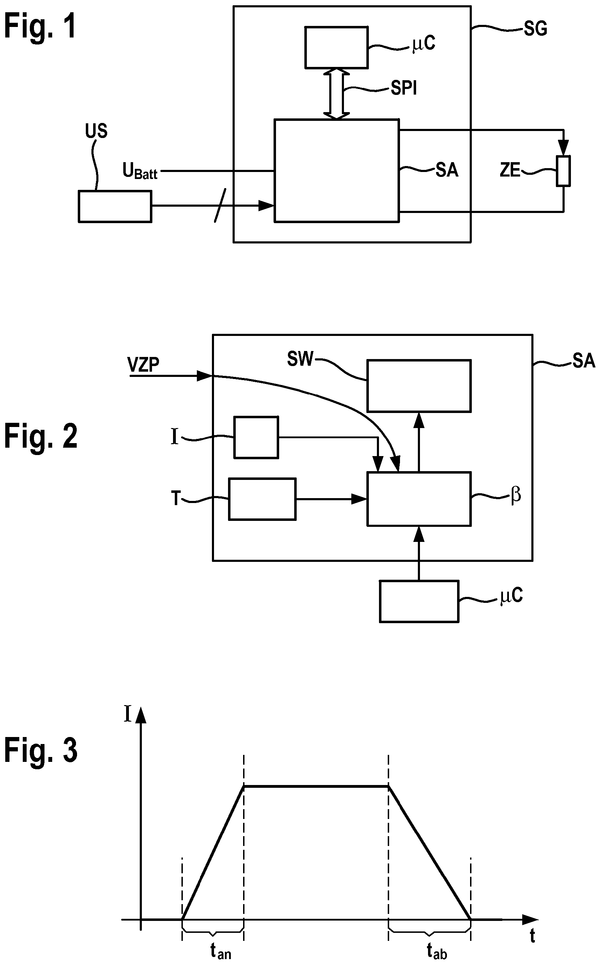

Figur 1 zeigt ein Blockdiagramm des erfindungsgemäßen Steuergeräts SG, wobei nur die für die Erfindung wesentlichen Komponenten dargestellt sind, während andere für den Betrieb des Steuergeräts notwendigen Komponenten, die aber für das Verständnis der Erfindung nicht notwendig sind, der Einfachheit halber weggelassen wurden. Das Steuergerät SG weist beispielsweise ein Metall- und/oder Kunststoffgehäuse auf und hat als wesentliche Komponenten einen Mikrocontroller µC und einen Systembaustein SA, der als integrierter Schaltkreis ausgebildet ist. Es ist möglich, dass mehrere solcher Systembausteine SA vorhanden sind. Der Systembaustein SA vereinigt viele Funktionen des Steuergeräts auf sich. Zu diesen Funktionen gehört die Energieversorgung, aber auch Schnittstellen zu externen Sensoren, elektrisch steuerbare Leistungsschalter für die Zündkreisschaltung und beispielsweise auch einen Safety-Controller zur parallelen Auswertung der Sensorsignale im Vergleich zum Mikrocontroller, um einen unabhängigen Hardwarepfad der Auswertung für die Sensorsignale bereitzustellen. Der Mikrocontroller µC und der Systembaustein SA sind beispielsweise über den sogenannten SPI-Bus (Serial Peripheral Interface) miteinander für den Datenaustausch verbunden. Der Systembaustein weist beispielsweise auch Watchdogfunktionen auf, um den Mikrocontroller µC zu überwachen.

An den Systembaustein SA sind die Batteriespannung Ubat und eine Umschaltsensorik US angeschlossen. Der Systembaustein SA versorgt das Steuergerät SG aus der Batteriespannung Ubat, indem er diese Spannung im für das Steuergerät benötigten Pegel wandelt. Dazu werden Schaltwandler verwendet. Weiterhin sorgt der Systembaustein dafür, dass die nicht dargestellte Energiereserve üblicherweise ein oder mehrere Elektrolytkondensatoren auf ihre Spannung geladen werden. Auch hierfür wird ein Schaltwandler in Verbindung mit einem sogenannten Pre-charger verwendet. Über die auf dem Systembaustein SA integrierte Zündkreisschaltung wird das hier beispielhaft dargestellte Zündelement ZE beispielsweise für einen Airbag bestromt und damit gezündet. Üblicherweise sind viele Zündkreise an den Systembaustein SA angeschlossen und nicht nur einer wie hier vereinfacht dargestellt.

Die Temperatur des Systembausteins SA ist bei gegebener Last ein Indikator für seinen Wirkungsgrad. Weiterhin kann es durch schnelle Schaltzeiten im Wandlerbereich des Systembausteins SA auch zu elektromagnetischen Direktabbstrahlungen führen, sowie über die Verkopplung (beispielsweise durch unvermeidliche Substratkopplungen) des Schaltwandlerblocks zu anderen Schaltungsblöcken, eine Abstrahlung aufgrund der Anbindung dieser Schaltungsblöcke des Systemsbausteins SA an den Kabelbaum, wie Zündkreise und Sensorleitungen, mit entsprechender Antennenwirkung kommen. Erfindungsgemäß wird die aktuelle thermische Belastung des Systemsbausteins SA durch eine Beeinflussungsschaltung bestimmt und im Vergleich zur maximalen thermischen Belastung festgelegt, inwieweit die aktuelle thermische Belastung weiter erhöht werden kann, um dafür die Abstrahleigenschaften des Systembausteins SA zu verbessern. Dieser Einfluss wird durch die Anstiegs- und Abfallzeiten des Schalttransistors oder der Schalttransistoren des Schaltwandlers beeinflusst.

Figur 2 zeigt hierfür ein vereinfachtes Blockdiagramm des Systembausteins SA. In eine Beeinflussungsschaltung B gehen die an den Schaltwandler angelegte Spannung VZP, die von der Batteriespannung abgeleitet ist, der Schaltwandlerstrom I und die Chiptemperatur T ein. Es ist möglich, dass nur eine dieser Größen oder zwei dieser Größen durch die Beeinflussungsschaltung B zur Bestimmung der thermischen Belastung herangezogen werden. Es ist möglich, dass Teile dieser Aufgabe oder die ganze Aufgabe der Mikrocontroller µC übernimmt, der dafür mit der Beeinflussungsschaltung B verbunden ist und somit ein Teil dieser Beeinflussungsschaltung ausmacht.

Hat die Beeinflussungsschaltung B festgestellt, dass die thermische Belastung des Systembausteins SA als integrierten Schaltkreis noch Reserven bis zur maximalen thermischen Belastung bietet, dann kann sie den Schaltwandler SW veranlassen, die aktuelle thermische Belastung zugunsten einer verringerten Abstrahlung und damit verbesserter EMV-Eigenschaften zu veranlassen. Dies wird über die Beeinflussung der Anstiegs- und Abfallzeiten der Flanken der Schalttransistoren im Schaltwandler verursacht.

Figur 3 zeigt in einem Stromzeitdiagramm einen Strompuls, der durch den Schalttransistor des Schaltwandlers verursacht wird und durch ihn fließt. Der Strompuls weist eine Anstiegszeit tan und eine Abfallszeit tab auf. Die Länge dieser Zeiten bestimmt wesentlich die thermische Belastung aber auch die Abstrahlcharakteristik des Schaltwandlers. Je kürzer diese Zeiten sind, umso geringer ist die thermische Belastung aber umso höher ist die Frequenz der Abstrahlung und die Größe der Direktabstrahlung beziehungsweise der Einkopplung in Strukturen, deren Koppelwirkung mit der Frequenz zunimmt (Kapazitive Kopplungen beispielsweise ASIC-Substrat etc.). Umgekehrt ist die Abstrahlung bei langen Anstiegs- und Abfallzeiten reduziert, aber dafür die thermische Belastung erhöht. Ein Optimum wird erfindungsgemäß bestimmt.

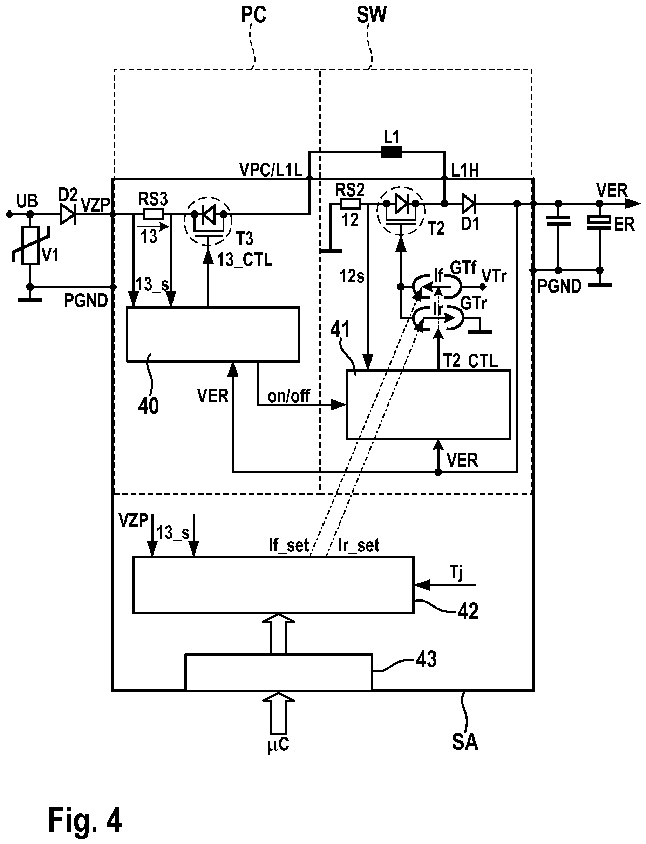

Figur 4 zeigt ein Blockschaltbild des erfindungsgemäßen Systembausteins als integrierter Schaltung mit angeschlossenen Komponenten bezüglich des Schaltwandlers. Vorliegend weist das Systembaustein SA einen Pre-Charger PC auf, der die Energiereserve auf ungefähr das Batteriespannungsniveau VZP auflädt. Dieser Pre-Charger PC arbeitet dabei wie eine Stromquelle. Nach der Aufladung auf die Batteriespannung arbeitet er als Schalter mit einem definierten Durchgangswiderstand Rdson, d. h. der Transistor P3 des Pre-Chargers PC ist immer durchgeschaltet. Der Pre-Charger PC weist dabei einen Vorwiderstand RS3 auf, der als Shuntwiderstand verwendet wird. Die Ansteuerung 40 des Pre-Chargers PC betreibt den Transistor T3 in Abhängigkeit von der an der Energiereserve ER gemessenen Energiereservespannung VER. Im Ladebetrieb schaltet der Pre-Charger PC über seine Steuerung 40 den Schaltwandler SW aus. Ist die Aufladung abgeschlossen, dann wird der Schaltwandler wieder durch den Pre-Charger PC und dessen Steuerung 40 freigegeben.

Die Steuerung oder Ansteuerung 40 des Precharger weist zur Verarbeitung von Eingangssignalen wie der Spannung VER Verarbeitungsschaltungen oder entsprechende Software auf, wobei die Verarbeitungsschaltungen analog und/oder digital ausgebildet sein können. Zur Ansteuerung des Transistors T3 und für andere Signalausgänge liegen geeignete Treiberschaltungen vor. Ähnliche Konfigurationen werden für alle Steuer- bzw. Ansteuerschaltungen verwendet.

Die Steuerung 40 steuert den Transistor T3 über den Strom I3_CTL, während der Strom I3_S an dem Shuntwiderstand RS3 gemessen wird, um den Strom I3 gegebenenfalls einzuregeln. Die Batteriespannung VZP wird über die Diode D2 verpolgeschützt, wobei die Batteriespannung UB über den zum Schutz gegen Überspannung vorgesehenen Varistor V1 gegen Masse anliegt.

Der Pre-Charger PC ist über den Transistor T3 über einen Ausgang VPC/L1L an eine Induktivität L1 des Schaltwandlers SW angeschlossen, so dass der Ladestrom I3 des Pre-Chargers PC über diese Induktivität L1, einen Eingang L1H an dem Systembaustein SA über eine weitere Diode D1 an die Energiereserve ER fließt. Dies ist der Schaltwandlerstrom.

Die Schaltwandlersteuerung 41 hat ebenfalls als Eingangsparameter vorliegend beispielhaft die Energiereservespannung VER. Der Schaltaufwärtswandler SW ist vorliegend als Festfrequenzwandler ausgebildet. Die Frequenz wird aus einem Oszillator 41 abgeleitet; ein PWM (Pulsweitenmodulationsregler) bestimmt die Schaltzeitpunkte des Aufwärtswandlertransistors T2. Zur Ansteuerung des Aufwärtswandlertransistors T2 ist ein Push-Pull-Gate-Treiber GTf, GTr bestehend aus zwei einstellbaren Stromquellen vorgesehen. Der Strom, der für die fallende Spannungsflanke an L1H zuständig ist, wird mit GTf bezeichnet und hat die einstellbare Stromhöhe If. Der Strom der für die steigende Spannungsflanke an L1H zuständig ist, wird mit Gtr bezeichnet, und hat die einstellbare Stromhöhe Ir.

Der Transistor ist über den Shuntwiderstand RS2 an Masse angeschlossen und über die Diode D1 an die Energiereserve ER sowie über den Eingang L1H an L1. Der Strom I2 fließt gegen Masse und dient zur Aufladung der Induktivität L1.

Die Stromquelle GTf ist zwischen dem Potenzial VTr und dem Gate des Transistors T2 und die Stromquelle GTr zwischen dem Gate und Masse geschaltet. Die Ansteuerung der Stromquellen GTf und GTr gelingt durch das Signal T2_CTL durch die Ansteuerung 41. Die Spannung VTr ist eine System - ASIC interne Spannung (hier vorzugsweise 3.3V) und wird bei anlaufenden Systemen direkt aus der Versorgungsspannung VZP im ASIC zB. durch eine einfache Zenerdiodenstabilisierung oder bei einem hochgefahrenen System aus der durch weitere Regler aus der Energiereservespannung und oder VZP gebildeten Analog und Digitalspannung gebildet.

Wird ein hoher Strom If ausgewählt, dann wird die Spannung am Gate von T2, beispielsweise ein MOSFET-Transistor schnell hochgefahren und die Schaltgeschwindigkeit von T2 nimmt zu. Die Spannung an L1H nimmt schnell ab, da ein hohes -dU (Spannungsdifferenz,-differential) zu dt an L1H bei der fallenden Flanke anliegt.

Wird ein hoher Strom Ir ausgewählt, dann wird die Spannung am Gate von T2 schnell abgebaut und die Schaltgeschwindigkeit von T2 nimmt zu. Die Spannung an L1H steigt schnell an, d. h. es liegt ein hohes dU zu dt an L1H der steigenden Flanke vor.

Im folgenden wird eine in Fig. 4 dargestellte vorteilhafte Weiterbildung der Erfindung beschrieben:
Die Vorgabe der Ströme If erfolgt durch lf_set und des Stroms Ir durch Ir_set. Im Schaltungsblock 42 der eine adaptive Schaltgeschwindigkeitssteuerung des Aufwärtswandlertransistors T2 bewirkt. Durch die alleinige Messung der Wandlereingangspannung VZP kann bereits eine wirkungsvolle Adaption vorgenommen werden. Hohe Wandlereingangspannungen VZP führen zu niedrigen If bzw. Ir-Stromwerten, damit keine zu schnellen Spannungsflanken an L1H entstehen, die eine schädliche Abstrahlung zur Folge haben könnten. Die Abstrahlung erfolgt insbesondere bei solchen System-ASICs SA über die Verkopplung des Schaltwandlerblocks mit anderen Schaltungsblöcken über unvermeidliche Substratkopplungen, die aufgrund ihrer direkten Anbindung an den Kabelbaum wie Zündkreise und Sensorleiten über die richtigen Antennen verfügen. Niedrige Wandlereingangsspannungen VZP führen zu höheren If beziehungsweise Ir-Stromwerten, damit die steigende thermische Belastung des Systembausteins SA zu kleineren Eingangsspannungen VZP hin gemildert wird.

Ergänzend oder optional kann eine Anpassung über den erfassten Wandlerstrom I3 erfolgen. Ein hoher Wandlerstrom führt zu einem hohen If bzw. Ir-Strom, um der weiteren Erwärmung des integrierten Schaltkreises entgegenzuwirken. Damit wird dann ein schnelles verlustreduziertes Schalten von T2 bewirkt.

Eine besonders wirkungsvolle Ergänzung der Spannungsadaption durch VZP als eigenständige Maßnahme ist die Auswertung der Temperatur des integrierten Schaltkreises SA. Im Gegensatz zur Steuerung über die Eingangsspannung VZP, die alleine durch die Wirkungsgradabhängigkeit des Aufwärtswandlers von der Spannung VZP bestimmt wird, bezieht diese auf eine durch andere Blöcke des integrierten Schaltkreises verursachte Erwärmung mit ein. Ist diese weitere Erwärmung durch andere Schaltungsblöcke nicht ein Worst-Case-Fall, wie dies bei einer reinen Steuerung über die Eingangsspannung des Schaltwandlers anzunehmen ist, kann nahezu bis auf wenige Ausnahmen im ppm-Bereich (Parts per million) die Abstrahlung und damit die Störung des Schaltwandlers für den Rundfunkbetrieb oder ähnliches vermieden werden, ohne externe Filtermaßnahmen, die statisch sind, Kosten verursachen und den Wandler von vornherein verschlechtern.

Die adaptive Schaltgeschwindigkeitssteuerung des Aufwärtswandlertransistors T2 kann auch durch den Mikrocontroller µC über den Steuerblock 43 digital adaptiert werden. Es ist möglich, dass der Mikrocontroller selbst beispielsweise über einen Analog-Digitalwandler die Eingangsspannung VZP misst und in Abhängigkeit dessen Einfluss auf den Schaltwandler und dabei die Anstiegs- und Abfallzeiten nimmt.

Die Temperatur des integrierten Schaltkreises wird vorliegend mit Tj bezeichnet. Bei der Ansteuerung durch den Mikrocontroller handelt es sich im einfachsten Fall um eine Schwellwertüberprüfung, wobei beispielsweise wenn VZPgrenz, bzw. UB < UBgrenz ist, erfolgt der Befehl die Ströme If und Ir zu erhöhen. Istjedoch VZP ≥ VZPgrenz bzw. UB ≥ UBgrenz, dann bleiben die Ströme auf einem vorgegebenen Wert. Es ist möglich unterschiedliche Werte für die steigenden und fallenden Flanken vorzusehen. Wie oben dargestellt, kann das Verfahren auch bei Abwärtswandlern eingesetzt werden. Diese Wandler weisen den Schalttransistor im Längszweig in Reihe mit der Spule auf. Dieses Verfahren kann auch auf synchrone Aufwärts- und Abwärtsschaltwandler angewendet werden. Diese Wandler ersetzen die Freilaufdiode beispielsweise D1 in Figur 4 durch einen synchron geschalteten Transistor T1. In diesem Fall können beide Transistoren eine entsprechende Adaption der Schaltgeschwindigkeit erfahren.

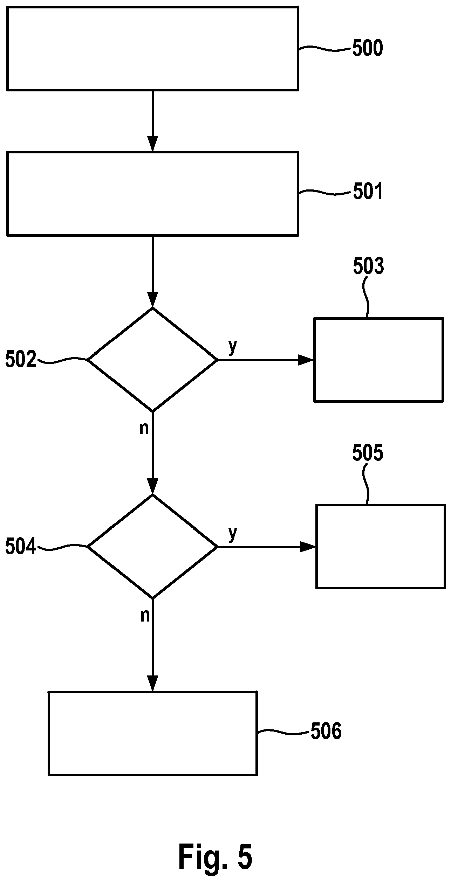

Figur 5 zeigt das erfindungsgemäße Verfahren in einem Flussdiagramm. In Verfahrensschritt 500 werden physikalische Parameter des integrierten Schaltkreises erfasst. Zu solchen physikalischen Parametern zählen die Eingangsspannung VZP, Schaltwandlerstrom sowie die Temperatur des integrierten Schaltkreises. Diese Temperatur kann durch einen entsprechenden Temperatursensor auf dem integrierten Schaltkreis, beispielsweise über die Temperaturabhängigkeit von Dioden unter Konstantstrom, temperaturabhängige Widerstände etc. ermittelt werden.

Die Beeinflussungsschaltung 42, 43 bestimmt die thermische Belastung anhand wenigstens eines dieser Parameter. Die thermische Belastung die dadurch bestimmt wird, wird in Verfahrensschritt 502 mit einer Grenzbelastung vergliche, wobei wenn Grenzbelastung höher sein als die aktuelle thermische Belastung die bestimmt wurde, dann kann im Verfahrensschritt 503 die Abstrahlung durch die Beeinflussung der Anstiegs- und Abfallszeiten gesenkt werden. Ist das nicht der Fall, dann wird in Verfahrensschritt 504 geprüft, ob die thermische Beanspruchung gesenkt werden kann, indem steilere Flanken gewählt werden. Dies kann dann geschehen, wenn die Abstrahlung noch nicht zu hoch ist. Die thermische Beanspruchung wird in Verfahrensschritt 505 gesenkt. Ist jedoch auch dies nicht der Fall, dann wird in Verfahrensschritt 506 das erfindungsgemäße Verfahren beendet.

## Patentansprüche

1. Steuergerät (SG) zur Ansteuerung von Personenschutzmitteln für ein Fahrzeug mit wenigstens einem Schaltwandler (SW) zur Spannungsumsetzung, wobei der wenigstens eine Schaltwandler (SW) auf einem integrierten Schaltkreis (SA) angeordnet ist, wobei das Steuergerät (SG) eine Beeinflussungsschaltung (42, 43) für den wenigstens einen Schaltwandler (SW) aufweist, und wobei die Beeinflussungsschaltung (42, 43) in Abhängigkeit von wenigstens einem physikalischen Parameter an dem integrierten Schaltkreis (SA) eine thermische Belastung des integrierten Schaltkreises bestimmt und in Abhängigkeit von der thermischen Belastung Anstiegs- und/oder Abfallzeiten von wenigstens einem Ausgangssignal des Schaltwandlers (SW) verändert **dadurch gekennzeichnet, dass** kürzere Anstiegs- und/oder Abfallzeiten gewählt werden, wenn die thermische Belastung größer als eine Grenzbelastung ist.

2. Steuergerät nach Anspruch 1, **dadurch gekennzeichnet, dass** die Beeinflussungsschaltung zumindest teilweise auf dem integrierten Schaltkreis (SA) angeordnet ist.

3. Steuergerät nach Anspruch 1 oder 2, **dadurch gekennzeichnet, dass** ein Prozessor (µC) im Steuergerät (SG) zumindest ein Teil der Beeinflussungsschaltung ist.

4. Steuergerät nach einem der vorhergehenden Ansprüche, **dadurch gekennzeichnet, dass** der wenigstens eine Schaltwandler (SW) wenigstens einen Schalttransistor (T2) aufweist, der durch eine Push-Pull-Gate-Treiberschaltung angesteuert wird, wobei die Push-Pull-Gate-Treiberschaltung eine erste einstellbare Stromquelle (GTf) für eine Abfallzeit einer Schalttransistorspannung und eine zweite einstellbare Stromquelle (GTr) für eine Anstiegszeit der Schalttransistorspannung aufweist.

5. Steuergerät nach einem der vorhergehenden Ansprüche 1-3, **dadurch gekennzeichnet, dass** der wenigstens eine Schaltwandler (SW) wenigstens einen Schalttransistor (T2) aufweist, der durch eine Push-Pull-Gate-Treiberschaltung angesteuert wird, wobei die Push-Pull-Gate-Treiberschaltung quantisierte Push Transistoren für die Abfallzeit der Drain-Source oder Kollektor-Emitter Schalttransistorspannung und quantisierte Pull-Transistoren für die Anstiegszeit der Drain-Source oder Kollektor-Emitter-Schalttransistorspannung aufweist.

6. Steuergerät nach einem der Ansprüche 1 bis 5, **dadurch gekennzeichnet, dass** der wenigstens eine physikalische Parameter eine Eingangsspannung (VZP) an den wenigstens einen Schaltwandler (SW) und/oder ein Schaltwandlerstrom (13) und/oder eine Temperatur (TJ) des integrierten Schaltkreises (SA) ist.

7. Verfahren zur Ansteuerung von Personenschutzmitteln für ein Fahrzeug, wobei wenigstens ein Schaltwandler (SW) zur Spannungsumsetzung verwendet wird, wobei eine Beeinflussungsschaltung (42, 43) für den wenigstens einen Schaltwandler (SW), der auf einem integrierten Schaltkreis angeordnet ist, im Steuergerät (SG) verwendet wird, wobei die Beeinflussungsschaltung (42, 43) in Abhängigkeit von wenigstens einem physikalischen Parameter eine thermische Belastung des integrierten Schaltkreises (SA) bestimmt, und wobei in Abhängigkeit von der thermischen Belastung Anstiegs- und/oder Abfallzeiten von wenigstens einem Ausgangssignal des wenigstens einen Schaltwandlers (SW) verändert werden, **dadurch gekennzeichnet, dass** kürzere Anstiegs- und/oder Abfallzeiten gewählt werden, wenn die thermische Belastung größer als eine Grenzbelastung ist.

8. Verfahren nach Anspruch 7, **dadurch gekennzeichnet, dass** als der wenigstens eine physikalische Parameter eine Eingangsspannung (VZP) des wenigstens einen Schaltwandlers (SW) und/oder ein Schaltwandlerstrom (13) und/oder eine Temperatur (TJ) des integrierten Schaltkreises (SA) verwendet werden.

## Claims

1. Control device (SG) for actuating personal protection means for a vehicle comprising at least one switching converter (SW) for voltage conversion, wherein the at least one switching converter (SW) is arranged on an integrated circuit (SA), wherein the control device (SG) has an influencing circuit (42, 43) for the at least one switching converter (SW), and wherein the influencing circuit (42, 43) determines a thermal loading of the integrated circuit depending on at least one physical parameter at the integrated circuit (SA) and changes rise and/or fall times of at least one output signal of the switching converter (SW) depending on the thermal loading, **characterized in that** shorter rise and/or fall times are selected when the thermal loading is greater than a limit loading.

2. Control device according to Claim 1, **characterized in that** the influencing circuit is at least partly arranged on the integrated circuit (SA).

3. Control device according to Claim 1 or 2, **characterized in that** a processor (µC) in the control device (SG) is at least one part of the influencing circuit.

4. Control device according to one of the preceding claims, **characterized in that** the at least one switching converter (SW) has at least one switching transistor (T2), which is actuated by a push-pull gate driver circuit, wherein the push-pull gate driver circuit has a first adjustable current source (GTf) for a fall time of a switching-transistor voltage and a second adjustable current source (GTr) for a rise time of the switching-transistor voltage.

5. Control device according to one of the preceding Claims 1-3, **characterized in that** the at least one switching converter (SW) has at least one switching transistor (T2), which is actuated by a push-pull gate driver circuit, wherein the push-pull gate driver circuit has quantized push transistors for the fall time of the drain-source or collector-emitter switching-transistor voltage and quantized pull transistors for the rise time of the drain-source or collector-emitter switching-transistor voltage.

6. Control device according to one of Claims 1 to 5, **characterized in that** the at least one physical parameter is an input voltage (VZP) at the at least one switching converter (SW) and/or a switching-transistor current (13) and/or a temperature (TJ) of the integrated circuit (SA).

7. Method for actuating personal protection means for a vehicle, wherein at least one switching converter (SW) is used for voltage conversion, wherein an influencing circuit (42, 43) for the at least one switching converter (SW), which is arranged on an integrated circuit, is used in the control device (SG), wherein the influencing circuit (42, 43) determines a thermal loading of the integrated circuit (SA) depending on at least one physical parameter, and wherein rise and/or fall times of at least one output signal of the at least one switching converter (SW) are changed depending on the thermal loading, **characterized in that** shorter rise and/or fall times are selected when the thermal loading is greater than a limit loading.

8. Method according to Claim 7, **characterized in that** an input voltage (VZP) of the at least one switching converter (SW) and/or a switching-converter current (13) and/or a temperature (TJ) of the integrated circuit (SA) are used as the at least one physical parameter.

## Revendications

1. Contrôleur (SG) destiné à commander des moyens de protection des personnes pour un véhicule, comprenant au moins un convertisseur à découpage (SW) destiné à la conversion de tension, l'au moins un convertisseur à découpage (SW) étant disposé sur un circuit intégré (SA), le contrôleur (SG) possédant un circuit d'influence (42, 43) pour l'au moins un convertisseur à découpage (SW) et
le circuit d'influence (42, 43) déterminant une charge thermique du circuit intégré en fonction d'au moins un paramètre physique au niveau du circuit intégré (SA) et modifiant les temps de montée et/ou de descente d'au moins un signal de sortie du convertisseur à découpage (SW) en fonction de la charge thermique, **caractérisé en ce que** des temps de montée et/ou de descente plus courts sont sélectionnés lorsque la charge thermique est supérieure à une charge limite.

2. Contrôleur selon la revendication 1, **caractérisé en ce que** le circuit d'influence est au moins partiellement disposé sur le circuit intégré (SA).

3. Contrôleur selon la revendication 1 ou 2, **caractérisé en ce qu'**un processeur (µC) dans le contrôleur (SG) est au moins une partie du circuit d'influence.

4. Contrôleur selon l'une des revendications précédentes, **caractérisé en ce que** l'au moins un convertisseur à découpage (SW) possède au moins un transistor de commutation (T2) qui est excité par un circuit d'attaque de gâchette symétrique, le circuit d'attaque de gâchette symétrique possédant une première source de courant réglable (GTf) pour un temps de descente d'une tension de transistor de commutation et une deuxième source de courant réglable (GTr) pour un temps de montée de la tension de transistor de commutation.

5. Contrôleur selon l'une des revendications précédentes 1 à 3, **caractérisé en ce que** l'au moins un convertisseur à découpage (SW) possède au moins un transistor de commutation (T2) qui est excité par un circuit d'attaque de gâchette symétrique, le circuit d'attaque de gâchette symétrique possédant des transistors de poussée quantifiés pour le temps de descente de la tension de transistor de commutation drain-source ou collecteur-émetteur et des transistors de poussée quantifiés pour le temps de montée de la tension de transistor de commutation drain-source ou collecteur-émetteur.

6. Contrôleur selon l'une des revendications 1 à 5, **caractérisé en ce que** l'au moins un paramètre physique est une tension d'entrée (VZP) à l'au moins un convertisseur à découpage (SW) et/ou un courant de convertisseur à découpage (13) et/ou une température (TJ) du circuit intégré (SA).

7. Procédé de commande de moyens de protection des personnes pour un véhicule, au moins un convertisseur à découpage (SW) étant utilisé pour la conversion de tension, un circuit d'influence (42, 43), qui est disposé sur un circuit intégré, étant utilisé dans le contrôleur (SG) pour l'au moins un convertisseur à découpage (SW), le circuit d'influence (42, 43) déterminant une charge thermique du circuit intégré (SA) en fonction d'au moins un paramètre physique, et des temps de montée et/ou de descente d'au moins un signal de sortie de l'au moins un convertisseur à découpage (SW) étant modifiés en fonction de la charge thermique, **caractérisé en ce que** des temps de montée et/ou de descente plus courts sont sélectionnés lorsque la charge thermique est supérieure à une charge limite.

8. Procédé selon la revendication 7, **caractérisé en ce que** l'au moins un paramètre physique utilisé est une tension d'entrée (VZP) de l'au moins un convertisseur à découpage (SW) et/ou un courant de convertisseur à découpage (13) et/ou une température (TJ) du circuit intégré (SA).
